# EUROPÄISCHE PATENTSCHRIFT

(11) **EP 2 603 767 B1**
(45) Veröffentlichungstag und Bekanntmachung des Hinweises auf die Patenterteilung: **25.09.2019**
(21) Anmeldenummer: 11746194.7
(22) Anmeldetag: 18.07.2011
(51) Int. Cl.: G01B 11/25, G01B 21/04, G06T 7/00, G01B 11/245, G01B 11/275

(54) **VERFAHREN ZUM KALIBRIEREN EINES MESSSYSTEMS UND VORRICHTUNG ZUM DURCHFÜHREN DES VERFAHRENS**
METHOD FOR CALIBRATING A MEASUREMENT SYSTEM AND DEVICE FOR CARRYING OUT THE METHOD
PROCÉDÉ D'ÉTALONNAGE D'UN SYSTÈME DE MESURE ET DISPOSITIF DE MISE EN OEUVRE DUDIT PROCÉDÉ

(30) Priorität: 12.08.2010 DE 102010039246
(43) Veröffentlichungstag der Anmeldung: 19.06.2013
(73) Patentinhaber: Beissbarth GmbH, 80993 München (DE)
(72) Erfinder: MACCHIA, Adriano, 80798 München (DE); UFFENKAMP, Volker, 71642 Ludwigsburg (DE)
(74) Vertreter: Schmitt-Nilson Schraud Waibel Wohlfrom Patentanwälte Partnerschaft mbB
(86) Internationale Anmeldenummer: PCT/EP2011/062273
(87) Internationale Veröffentlichungsnummer: WO 2012/019877

(56) Entgegenhaltungen:
- EP-A2- 1 091 186
- EP-B1- 1 376 051
- DE-A1-102008 042 024
- FR-A1- 2 921 478
- US-A- 5 612 905
- US-A- 5 768 443
- US-A- 5 923 727
- US-A1- 2006 152 711
- US-B2- 7 138 645

## Beschreibung

Die Erfindung betrifft ein Verfahren und eine Vorrichtung zum Kalibrieren eines Messsystems nach dem Oberbegriff des Anspruchs 1.

### Stand der Technik

Aus US 2006/0152711 A1 ist bereits ein Verfahren und eine Vorrichtung zur optischen Fahrwerksvermessung von Kraftfahrzeugen mit vier Messeinrichtungen bekannt, die aus verschiedenen Blickwinkeln zu vermessende Objekte am Kraftfahrzeug aufnehmen. Eine angeschlossene Auswerteeinheit ermittelt aus den aufgenommenen Bildern die Raumlage von Messpunkten am Kraftfahrzeug. Zur Bestimmung der Messplatzkoordinaten sind Gitternetzlinien auf einer Aufstandsfläche des Kraftfahrzeuges als Referenzmerkmale vorgesehen. Zusätzlich zu den Referenzmerkmalen ist eine mobile Prüfmerkmalanordnung mit Prüfmerkmalen in Form eines Würfels vorhanden. Die Referenzmerkmale und Prüfmerkmale werden von den Messeinrichtungen aufgenommen und zur Kalibrierung des Messplatzbezugssystem herangezogen.

In DE 10 2008 042 024 A1 wird ein Verfahren und eine Vorrichtung zur optischen Achsvermessung von Kraftfahrzeugen genannt. Hierbei werden an den Rädern befestigte Messtafeln mit optisch registrierbaren Marken von zwei Messeinheiten mit jeweils zwei Stereo-Kamera-Anordnungen erfasst. In einem Referenziervorgang wird mit einer in die Messeinheiten integrierten Referenziereinrichtung ein Messplatzbezugssystem für die Messeinheiten festgelegt. Die Kalibrierung der Stereo-Kamera-Systeme zueinander und der Referenziereinrichtung zu den Stereosystemen ist hierbei von großer Bedeutung.

Gemäß US 7 138 645 B2 wird eine Kalibrierungsmustereinheit, die Korrekturinformationen eines Abbildungssystems durch Abbildung auf dem Abbildungssystem erhält, durch Kombinieren einer Anzahl dreidimensional angeordneter Ebenen gebildet. Die Kalibrierungsmustereinheit umfasst Stützelemente, von denen jedes eine vorbestimmte Oberfläche aufweist, die einer der Ebenen entspricht, und ein Kalibrierungsmuster, wobei ein vorbestimmtes Muster auf der vorbestimmten Oberfläche des Stützelements ausgebildet ist. Das Stützelement kann die Kalibrierungsmustereinheit selektiv auf eine erste Form zum Fotografieren, wobei die Korrekturinförmation erhalten wird, und eine zweite Form für andere Zwecke einstellen.

US 5 768 443 A offenbart ein Verfahren zur Verwendung in einem Mehrkamerasystem, in dem eine Mehrzahl von Kameras gleichzeitig jeweils ein Bild eines anderen Abschnitts eines interessierenden Objekts erfasst. Die Sichtfelder der Kameras können genau koordiniert werden, so dass innerhalb jedes Sichtfelds genaue Messungen über mehrere Sichtfelder durchgeführt werden können, selbst wenn Bildverzerrungen vorhanden sind. Das Verfahren umfasst die Schritte des Fixierens der mehreren Kameras zum Kalibrierungszeitpunkt in Bezug auf ein im Wesentlichen starres dimensionsstabiles Substrat, das mehrere Kalibrierungsziele umfasst, die jeweils ein Referenzmerkmal aufweisen. Von jeder Kamera wird ein Bild eines Kalibrierungsziels erfasst, um mehrere Kalibrierungszielbilder bereitzustellen. Dann wird für jedes Kalibrierungszielbild eine Verzerrungskorrekturkarte erzeugt. Zur Laufzeit wird von jeder Kamera ein Bild aufgenommen, wobei mindestens zwei der Bilder einen Teil des Objekts enthalten, um eine Mehrzahl von Teilobjektbildern bereitzustellen. Die Teilobjektbilder werden dann mit Hilfe der Verzerrungskorrekturkarte transformiert, um mehrere korrigierte Teilobjektbilder bereitzustellen. Es kann eine kombinierte Korrekturkarte verwendet werden, die sowohl Bildverzerrungen korrigiert, als auch lokale Kamerakoordinaten in globale Koordinaten umwandelt.

Gemäß US 5 923 727 A umfasst eine Vorrichtung zum Kalibrieren eines intraoperativen Röntgensystems mit einer Röntgenquelle und einem Detektor eine optische Kamera, die der Röntgenquelle zugeordnet ist; eine dem Detektor zugeordnete optische Kamera; ein Röntgenstrahlphantom, das während eines Offline-Prozesses in einem Sichtfeld des Röntgensystems angeordnet ist; ein optisches Phantom, das während des Offline-Prozesses sowie des Online-Prozesses in einem Sichtfeld der optischen Kameras angeordnet ist; und eine Vorrichtung zum Berechnen einer jeweiligen Projektionsmatrix aus einem Bild, das von einer Röntgenquelle und einem Detektor sowie den optischen Kameras bereitgestellt wird. US 5 923 727 A beschreibt auch ein Verfahren zum Erhalten der Projektionsmatrizen, welche die Bildgebungsgeometrie charakterisieren, unter Verwendung der der Röntgengeometrie zugeordneten Projektionsmatrizen sowie der während eines Offline-Prozesses berechneten Projektionsmatrizen der optischen Kameras. Die relative Bewegung der Vorrichtung zwischen dem Offline- und dem Online-Prozess wird unter Verwendung der Projektionsmatrizen berechnet, welche die Abbildungsgeometrie der optischen Kameras charakterisieren.

Aufgabe der vorliegenden Erfindung ist es ein Verfahren und eine Vorrichtung zur einfachen Kalibrierung eines Messsystems mit Stereo-Kamera-Systemen zu schaffen, welches auf einfache Art und Weise in der Werkstatt durchgeführt werden kann.

### Offenbarung der Erfindung

Die Aufgabe der Erfindung wird mit den kennzeichnenden Merkmalen der unabhängigen Ansprüche gelöst. Das erfindungsgemäße Verfahren zur Kalibrierung eines Messsystems und die Vorrichtung zur Durchführung des Verfahren mit den Merkmalen der unabhängigen Ansprüche hat den Vorteil, dass das Verfahren einfach durchzuführen ist und die Vorrichtung einen einfachen Aufbau hat, so dass es in jeder Werkstatt mit einem Messsystem zur Achsvermessung angewendet werden kann. Das Messsystem mit Stereo-Kamera-Systemen muss nicht mehr direkt beim Hersteller oder in der Fertigung kalibriert werden, sondern kann direkt vor Ort kalibriert werden. Ein Austausch von Kameras und die nachfolgende Kalibrierung sind dadurch schneller und einfacher durchzuführen. Des Weiteren kann die Genauigkeit der Achsvermessung einfach vor Ort überprüft werden.

Die Erfindung ist in den Ansprüchen 1 bis 14 definiert. In den abhängigen Ansprüchen sind vorteilhafte Ausgestaltungen und Weiterbildungen des erfindungsgemäßen Verfahrens nach Anspruch 1 und der erfindungsgemäßen Vorrichtung nach Anspruch 9 angegeben.

Zweckmäßig ist es, wenn die ermittelten 3D-Koordinaten der Bezugsmerkmale und die Orientierungsparameter der Aufnahmekamera gemeinsam mittels eines an sich bekannten Ausgleichsprozesses bestimmt werden, da auf bekannte und genaue numerische Verfahren zurückgegriffen wird. Als Orientierungsparameter werden die 3D-Koordinaten der Aufnahmeposition sowie die drei Rotationen zur Beschreibung der Aufnahmerichtung einer Kamera bezeichnet.

Ein weiterer Vorteil ist die Bestimmung der Genauigkeit der ermittelten 3D-Koordinaten der Bezugsmerkmale des Messrahmens in Form von Standardabweichungen aus der Auswertung des überbestimmten Systems, so dass die Kalibrierung der Messkameras nur durchgeführt wird, wenn die 3D-Koordinaten der Bezugsmerkmale mit einer hohen und für die Kalibrierung ausreichenden Genauigkeit bestimmt wurden.

Vorteilhaft ist die relative und/oder absolute Kalibrierung der mindestens zwei Messkameras im zweiten Schritt des Verfahrens. Hierbei wird die relative Orientierung der Messkameras eines Stereo-Kamera-Systems zueinander hergestellt und die globale Orientierung der Messkameras in einem globalen 3D-Koordinatensystem festgelegt.

Ein weiterer Vorteil ergibt sich durch die Bestimmung aller intrinsischen oder Teile der intrinsischen Parameter mindestens einer Messkamera, da nach einem Kameratausch die inneren Parameter der Kamera kalibriert werden können.

Vorteilhaft ist, dass im ersten Schritt die mindestens eine Aufnahmekamera mehrfach neu ausgerichtet wird und alle Bezugsmerkmale der Kalibriervorrichtung aus mindestens zwei Aufnahmepositionen durch Änderung der Aufnahmerichtung sequentiell oder kontinuierlich erfasst werden. Dies ermöglicht die Aufnahme einer ausreichenden Anzahl von Bildern mit Bezugsmerkmalen, die sich teilweise gegenseitig überlappen, um damit im dritten Schritt ein Gleichungssystem mit Unbekannten, die die Bezugsmerkmale, Kamerapositionen und Aufnahmerichtungen in einem gemeinsamen 3D-Koordinatensystem darstellen, vollständig zu lösen.

Ein besonderer Vorteil ist die genäherte Vorgabe der Aufnahmepositionen und Aufnahmerichtungen der mindestens einen Aufnahmekamera durch eine Positioniervorrichtung. Durch die Positioniervorrichtung wird sichergestellt, dass bei der sequentiellen oder kontinuierlichen Aufnahme der Bezugsmerkmale durch die Aufnahmekamera alle Bezugsmerkmale vollständig aufgenommen werden und eine höhere Qualität der Aufnahmen erreicht wird. Verwackelte Aufnahmen und eine unzureichende Überdeckung der Bilder können vermieden werden.

Dieser Vorteil wird noch verstärkt, wenn die Aufnahmepositionen und Aufnahmerichtungen der Positioniervorrichtung automatisch durch eine Auswerteeinheit vorgegeben werden, da mit internen Rechenalgorithmen die Bildaufnahme begleitet wird und eine günstige Aufnahmeposition und eine günstige Aufnahmerichtung für die nächste Bildaufnahme berechnet werden kann.

Ein weiterer Vorteil des Verfahrens ist, dass alle oder einzelne Messkameras einer Bildaufnahmeeinrichtung ausgetauscht und danach kalibriert werden können. Dies ermöglicht einen Vor-Ort Service, falls Kameras defekt sind. Um die globale Kalibrierung aufrechtzuerhalten muss jedoch mindestens eine Messkamera der Bildaufnahmeeinrichtung unverändert bleiben.

Bei der Kalibrierung der Referenziereinrichtungen und/oder mindestens einer Messkamera zeigt sich ein weiterer Vorteil, da zwei Bildaufnahmeeinrichtungen gleichzeitig in den Messrahmen platziert werden können. Hierdurch ergeben sich bei der Durchführung des Verfahrens keine zusätzlichen Verfahrensschritte. Die Kalibrierung der Referenziereinrichtungen wird gleichzeitig mit der Kalibrierung der mindestens einen Messkamera vorgenommen.

Dadurch, dass die Kalibriervorrichtung aus mindestens drei Platten aufgebaut ist, wird ein einfacher Auf- und Abbau der Kalibriervorrichtung in der Werkstatt ermöglicht. Des Weiteren lassen sich die einzelnen Platten gut transportieren. Die Platten sind während des Verfahrens fest miteinander verbundenen, so dass sich die Position der Bezugsmerkmale zueinander nicht verändern kann, was für einen korrekten Ablauf des Verfahrens Voraussetzung ist.

Zweckmäßig lässt sich die Kalibriervorrichtung dadurch realisieren, indem mindestens eine Platte als Bodenplatte eingesetzt wird, die senkrecht zu zwei einander gegenüber angeordneten Platten steht. Dadurch kann die Bildaufnahmeeinrichtung auf der Bodenplatte gestellt werden und mit den beiden Sterero-Kamerasystemen können gleichzeitig die beiden gegenüber angeordneten Platten fokussiert werden.

Vorteilhaft ist die Benutzung von natürlichen und/oder künstlichen Marken als Bezugsmerkmale auf jeder Platte, da dies bei der Herstellung der Platten mit Bezugsmerkmalen eine große Anzahl von unterschiedlichen Herstellungsmaterialien und Herstellungsverfahren zulässt.

Durch die Benutzung von retro-reflektierenden und/oder aktiv licht aussendenden Bezugsmerkmalen wird die Aufnahme der Bezugsmerkmale bei schlechten Belichtungsverhältnissen vereinfacht. Des Weiteren vereinfacht die Benutzung von Bezugsmerkmale mit Kodierung die spätere Auswertung durch die Auswerteeinheit.

Ein besonderer Vorteil ergibt sich durch das Verbinden der Platten an ihren Rändern durch Steckverbindungen und/oder Schraubverbindungen. Da es sich um eine einfache und sichere Möglichkeit handelt die einzelnen Platten fest miteinander zu verbinden, die sich nach der Durchführung des Verfahrens aber auch einfach wieder lösen lässt.

### Ausführungsbeispiele

Ein Ausführungsbeispiel der Erfindung ist in der Zeichnung dargestellt und in der nachfolgenden Beschreibung näher erläutert.

Es zeigen:
- Figur 1: eine schematische Darstellung eines Messplatzes zur Achsvermessung eines Fahrzeuges mit einem Messsystem,
- Figur 2: eine Darstellung einer Kalibriervorrichtung,
- Figur 3: eine Darstellung einer Kalibriervorrichtung mit einer darin platzierten Bildaufnahmeeinrichtung und
- Figur 4: eine schematische Darstellung einer Kalibriervorrichtung mit zwei darin platzierten Bildaufnahmeeinrichtungen.

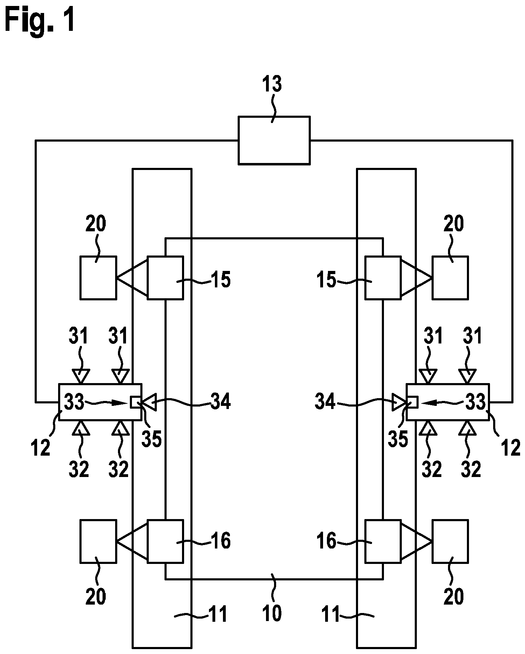

Figur 1 zeigt eine Achsvermessungseinrichtung mit einem Messsystem und einem Fahrzeug 10 auf einer Hebebühne mit zwei Fahrschienen 11. An den beiden Vorderrädern 15 und den beiden Hinterrädern 16 sind jeweils seitlich in den Raum abstehende, Messtafeln 20 befestigt. Die Messtafeln 20 besitzen eine im Wesentlichen ebene Fläche, auf der optisch registrierbare Markierungen angeordnet sind.

Das Messsystem umfasst zwei Bildaufnahmeeinrichtungen 12 mit jeweils vier Messkameras 31, 32 und mit jeweils einer Referenziereinrichtung 33 und eine Auswerteeinheit 13. Die beiden Bildaufnahmeeinrichtungen 12 sind jeweils seitlich von den beiden Fahrschienen 11 befestigt und stehen mit der Auswerteeinheit 13 in Verbindung, die eine Bildverarbeitungssoftware enthält. Die beiden Bildaufnahmeeinrichtungen 12 besitzen jeweils zwei Stereo-Kamerasysteme, die von den jeweils zwei Messkameras 31, 32 gebildet werden. Das nach vorn ausgerichtete Stereo-Kamerasystem, welches von den beiden Messkameras 31 gebildet wird, erfasst die an den Vorderrädern 15 angeordneten Messtafeln 20, und das nach hinten ausgerichtete Stereo-Kamerasystem, welches von den beiden Messkameras 32 gebildet wird, erfasst die an den Hinterrädern 16 angeordneten Messtafeln 20.

Jede Bildaufnahmeeinrichtung 12 umfasst ferner die Referenziereinrichtung 33 mit einer als Empfangseinheit ausgebildeten Referenzierkamera 34 und einer als Sendeeinheit ausgebildeten LED 35. Die beiden Bildaufnahmeeinrichtungen 12 sind im dargestellten Messsystem so ausgerichtet, dass die beiden Referenziereinrichtungen 33 einander zugewandt sind und die LED 35 der in der Darstellung rechten Bildaufnahmeeinrichtung 12 von der Referenzierkamera 34 der in der Darstellung linken Bildaufnahmeeinrichtung 12 aufgenommen werden kann. Analog kann die LED 35 der in der Darstellung linken Bildaufnahmeeinrichtung 12 von der Referenzierkamera 34 der in der Darstellung rechten Bildaufnahmeeinrichtung 12 aufgenommen werden.

Durch den Referenziervorgang wird ein Messplatzbezugssystem für die Bildaufnahmeeinrichtungen 12 festgelegt, welches der Auswerteeinheit 13 übermittelt wird. Es ist somit keine zusätzliche Bezugsanordnung zur Festlegung eines Messplatzbezugssystems notwendig. Die Achsvermesseinrichtung ist gegenüber Veränderungen der Position der Bildaufnahmeeinrichtung 12 während der Messung unempfindlich; eine Referenzierung der Bildaufnahmeeinrichtung 12 ist vor und/oder kontinuierlich während jedem Messvorgang möglich.

Anstelle einer globalen Auswerteeinheit 13 kann jede Bildaufnahmeeinrichtung 12 oder jede der Messkamera 31, 32 und jede Referenzierkamera 34 auch eine eigene Rechen- und Speichereinheit besitzen, die als Auswerteeinheit 13 dient und die miteinander verbunden sind.

Bezüglich der Durchführung des Verfahrens zur Achsvermessung mit dem dargestellten Messsystem wird auf die Patentanmeldung DE 10 2008 042 024 A1 verwiesen.

Nachfolgend wird die Kalibrierung des Messsystems mittels einer Kalibriervorrichtung 22 erläutert.

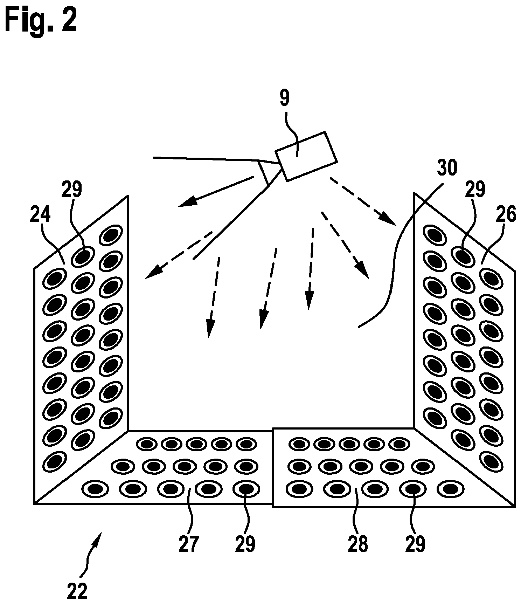

Die Kalibriervorrichtung 22 weist gemäß Figur 2 einen Messraum 30 mit Bezugsmerkmalen 29 und mindestens eine Aufnahmekamera 9 zur Bestimmung der 3D-Koordinaten der Bezugsmerkmale 29 auf. Die mindestens eine Aufnahmekamera 9 ist über dem Messraum 30 positioniert, so dass im Wesentlichen alle Bezugsmerkmale 29 aufgenommen werden können. Der Messraum 30 wird von einem U-förmigen Messrahmen 22 begrenzt, welcher aus vier ebenen Platten 24, 26, 27, 28, die an ihren Rändern fest miteinander verbunden sind, besteht. Die Platten 24, 26, 27, 28 bilden den U-förmigen Messrahmen 22, der die in den Messraum 30 weisende Bezugsmerkmale 29 aufweist. Die Platten 24, 26, 27, 28 können durch Steck- oder Schraubverbindungen miteinander verbunden werden. Auf der Oberfläche der Platten 24, 26, 27, 28 sind die Bezugsmerkmale 29 angeordnet. Zwei Platten 24, 26 sind in etwa parallel zueinander angeordnet, wobei die beiden Oberflächen, auf denen sich die Bezugsmerkmalen 29 befinden, einander zugewandt sind. Beispielsweise zwei weitere Platten 27, 28 bilden eine Bodenfläche und sind nebeneinander in der gleichen Ebene miteinander verbunden.

Anstelle der vier ebenen Platten 24, 26, 27, 28 kann der Messrahmen 22 auch aus drei Platten zusammengesetzt werden, wobei die beiden Platten 27, 28 eine einzelne Fläche bilden. Alternativ kann der Messrahmen 22 aus mehr als vier Platten zusammengesetzt werden, wobei die vier Platten 24, 26, 27, 28 in weitere Teilplatten zerlegt werden.

Die Bezugsmerkmale 29 können als 2D-Flächen oder 3D-Körper mit bekannter Geometrie, wie eines Kreises, eines Dreiecks, eines Rechtecks, einer Kugel, eines Würfels, eines Quaders oder ähnlichem, dargestellt werden, die einen guten Kontrast zu ihrer Umgebung gegebenenfalls unter Ausnutzung besonderer Beleuchtungsverhältnisse besitzen. Sie können als künstliche, vorzugsweise retro-reflektierende Merkmale ausgebildet sein. Derart ausgebildete Bezugsmerkmale 29 bieten den Vorteil, dass sie besonders einfach in einem aufgenommenen Bild detektiert werden können und dass durch ihre bekannte Geometrie eine hohe Messgenauigkeit erreicht werden kann. Den Bezugsmerkmalen 29 kann eine Codierung zugeordnet sein, um ihre Identifikation zu vereinfachen.

Als Bezugsmerkmale 29 können auch ohnehin vorhandene, natürliche Merkmale herangezogen werden, z.B. Kanten oder zufällige Kontrastmuster, die sich aus einer Textur des Rahmens ergeben. Eine Kombination von natürlichen und künstlichen Bezugsmerkmalen 29 ist ebenfalls möglich.

Weiterhin können geometrische Informationen der Bezugsmerkmale 29 bekannt sein und in der Auswerteeinheit 13 zugrunde gelegt werden, wie z.B. der Abstand zwischen Bezugsmerkmalen 29 oder die Koordinaten der Bezugsmerkmale 29 in einem lokalen 2D- oder 3D-Koordinatensystem zumindest eines Teils des Messrahmens 22. Wenn vorhanden, werden diese Informationen bei der rechnerischen Auswertung mit der Auswerteeinheit 13, insbesondere in einen Ausgleichungsprozess mit entsprechenden Toleranzen eingeführt.

Zum Kalibrieren des Messsystems werden in einem ersten Schritt die 3D-Koordinaten der Bezugsmerkmale 29 des Messrahmens 22 durch die mindestens eine Aufnahmekamera 9 bestimmt. Die Aufnahmekamera 9 mit einem flächenhaften Bildsensor kann eine der Messkameras 31, 32 oder eine der Referenzierkameras 34 der Bildaufnahmeeinrichtung 12 sein oder eine weitere Kamera sein, die nicht zum Messsystem gehört und nur zur Bestimmung der 3D-Koordinaten der Bezugsmerkmale 29 eingesetzt wird. Es können auch zwei Aufnahmekameras 9, z.B. zwei Messkameras 31, 32, der Bildaufnahmeeinrichtung 12 gleichzeitig zur Aufnahme eingesetzt werden. Die Aufnahmekamera 9 ist mit der Auswerteeinheit 13 verbunden.

Der Messrahmen 22 wird für die Dauer der Bestimmung der 3D-Koordinaten der Bezugsmerkmale 29 zweckmäßigerweise ortsfest aufgestellt. Er wird so platziert, dass aus mindestens zwei Perspektiven Bezugsmerkmale 29 des Messrahmens 22 aufgenommen werden können. Die Platten 24, 26, 27, 28 und damit die Bezugsmerkmale 29 dürfen nicht bewegt werden, solange bis alle notwendigen bzw. einzustellenden Perspektiven erfasst wurden und die anschließende Kalibrierung durchgeführt wurde.

Zur Bestimmung der 3D-Koordinaten der Bezugsmerkmale 29 des Messrahmens 22 müssen alle Bezugsmerkmale 29 durch die Aufnahmekamera 9 aus mindestens zwei unterschiedlichen Aufnahmepositionen aufgenommen werden. Die Erfassung der Bezugsmerkmale 29 erfolgt sequentiell, wobei eine Abfolge von Aufnahmen der Bezugsmerkmale 29 von einem Ende zum anderen Ende des Messrahmens 22 durch Änderung der Aufnahmerichtung bei fester Aufnahmeposition zweckmäßig ist. Die aufgenommenen Bilder müssen sich überlappen und mindestens vier gemeinsame Bezugsmerkmale 29 aufweisen. Nachdem die Aufnahme aller benötigten Bilder aus einer Aufnahmeposition abgeschlossen ist, wird die Aufnahmeposition der Aufnahmekamera 9 verändert und erneut alle Bezugsmerkmale 29 des Messrahmens 22 sequentiell aufgenommen.

Vorteilhaft kann der Einsatz von einem Hilfsadapter zum Halten und Ausrichten der Aufnahmekamera 9 sein. Der Hilfsadapter gibt der Aufnahmekamera 9 eine vordefinierte Aufnahmeposition und Aufnahmerichtung vor, wodurch eine vom Bediener weitgehend unabhängige Genauigkeit gewährleistet wird.

Die Bildaufnahme kann kontinuierlich erfolgen. Die dabei entstehenden Bilddaten werden entweder vollständig ausgewertet oder von der Auswerteeinheit 13 auf die zur Gewährleistung der Genauigkeit notwendige Menge reduziert.

Der Bediener kann bei der Bildaufnahme unterstützt werden. Es kann online an einem Monitor, der mit der Auswerteeinheit 13 verbunden ist, die aktuelle Aufnahmeposition und Aufnahmerichtung angezeigt werden, errechnet aus der Auswertung der sichtbaren Bezugsmerkmale 29 auf dem Messrahmen 22. Damit kann die Bedienperson sehr einfach die Aufnahmekamera 9 auf die nächste geforderte Aufnahmeposition und Aufnahmerichtung bringen und die Auswerteeinheit 13 kann die zur Gewährleistung der Genauigkeit notwendige Anzahl und Überdeckung der Aufnahmen einfordern. Auch kann eine interaktive Bedienerführung und Überwachung bezüglich der richtigen Verwendung des mindestens einen Hilfsadapters von der Auswerteeinheit 13 ausgeführt werden.

Die Auswertung der Bilder erfolgt nach einem statistischen Ausgleichsverfahren, da den Unbekannten in der Regel eine Vielzahl von Beobachtungen gegenüberstehen, die sich aus dem Netz der Bildaufnahmen ergeben. Die Positionen der Bezugsmerkmale 29 in den Bildern bilden gemeinsam mit den Aufnahmepositionen und den Aufnahmerichtungen der Aufnahmekamera 9 die Unbekannten in einem Gleichungssystem, die durch Überbestimmung anhand des Ausgleichungsprozesses bestimmt werden.

Nach Bestimmung der gesuchten 3D-Koordinaten der Bezugsmerkmale 29 können diese auf Plausibilität geprüft werden, wie z.B. Vollständigkeit und Abstand. Auch die erreichte Genauigkeit der 3D-Koordinaten in Form von Standardabweichungen aus der Auswertung des überbestimmten Systems kann zur Prüfung herangezogen werden. Nur wenn alle Kriterien positiv geprüft wurden, werden die 3D-Koordinaten der Bezugsmerkmale 29 für die Kalibrierung der Messkameras 31, 32 oder der Bildaufnahmeeinrichtung 12 oder der Referenziereinrichtung 33 genutzt. Dadurch wird die Korrektheit und Genauigkeit der Kalibrierung auch bei Anwendung durch den NichtFachmann gewährleistet.

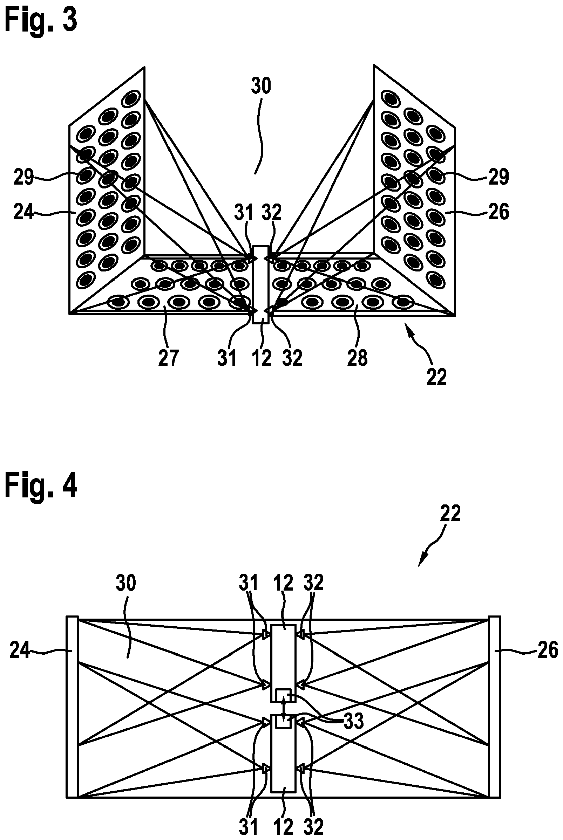

Nachdem im ersten Schritt die 3D-Koordinaten der Bezugsmerkmale 29 bestimmt sind, wird im zweiten Schritt mindestens eine Bildaufnahmeeinrichtung 12 im Messraum 30 angeordnet. In Figur 3 ist ein Ausführungsbeispiel gezeigt, bei dem eine Bildaufnahmeeinrichtung 12 mittig auf der Bodenfläche, die von den Platten 27 und 28 gebildet wird, positioniert ist. Des Weiteren sind die vier Messkameras 31, 32 so ausgerichtet, dass jeweils ein Stereo-Kamera System eine der beiden gegenüberliegenden Platten 24, 26 mit ihren Bezugsmerkmalen 29 fokussiert.

Im dritten Schritt wird die Kalibrierung der im Messraum 30 angeordneten mindestens einen Bildaufnahmeeinrichtung 12 oder die Kalibrierung von mindestens zwei Messkameras 31, 32 der Bildaufnahmeeinrichtung 12 vorgenommen. Da alle 3D-Koordinaten der Bezugsmerkmale 29 des Messrahmens 22 bekannt sind, ist mit bekannten Methoden der Bildverarbeitung eine Bestimmung der 3D-Koordinaten der Messkameras 31, 32 in einem gemeinsamen 3D-Koordinatensystem möglich. Es kann sowohl eine relative, als auch eine globale Kalibrierung der einzelnen Messkameras 31, 32 der Bildaufnahmeeinrichtung 12 vorgenommen werden.

Bei einer relativen Kalibrierung wird der Zusammenhang zwischen den beiden 3D-Kamerakoordinatensystemen zweier Messkameras 31, 32 wie z.B. in einem Stereo-Kamerasystems, hergestellt. Bei einer globalen Kalibrierung wird die äußere Orientierung der Messkameras 31, 32 im gemeinsamen globalen 3D-Koordinatensystem des Messsystems festgelegt, welches auch die Referenziereinrichtungen 33 umfasst.

Falls vor der Kalibrierung ein Tausch von Messkameras 31, 32 der Bildaufnahmeeinrichtung 12 stattfindet, muss mindestens eine Messkamera 31, 32 der Bildaufnahmeeinrichtung 12 unverändert bleiben, um den Bezug zum gemeinsamen globalen 3D-Koordinatensystem herzustellen und diesen numerisch auf die ausgetauschten Messkameras 31, 32 zu übertragen. Müssen alle Messkameras 31, 32 ausgetauscht werden, kann die Kalibrierung auch sequentiell in mehreren Schritten erfolgen, bis alle Kameras neu kalibriert sind.

Zusätzlich zu den relativen und globalen Kameraparametern können auch alle oder Teile der intrinsischen Parameter der Messkameras 31, 32 mitbestimmt werden. Die intrinsischen Kameraparameter definieren den Zusammenhang zwischen dem 3D-Kamerakoordinatensystem und dem 2D-Sensorkoordinatensystem und sind z.B. die Brennweite, Objektivverzeichnung, Pixelskalierung und Pixelorientierung einer Kamera.

Figur 4 zeigt eine weitere Ausführungsform der Erfindung bei der im zweiten Schritt anstelle einer Bildaufnahmeeinrichtung 12 zwei Bildaufnahmeeinrichtungen 12 im Messraum 30 angeordnet werden. Die beiden Bildaufnahmeeinrichtungen 12 sind so zueinander positioniert, dass die Referenziereinrichtungen 33 einander zugewandt sind. Des Weiteren sind die vier Messkameras 31, 32 so ausgerichtet, dass jeweils ein Stereo-Kamera System eine der beiden gegenüberliegenden Platten 24, 26 des Messrahmens 22 mit ihren Bezugsmerkmalen 29 fokussiert. Durch die Positionierung von zwei Bildaufnahmeeinrichtungen 12 im Messrahmen 22 ist es möglich neben der Kalibrierung der Messkameras 31, 32 auch eine Kalibrierung der Referenziereinrichtungen 33 vorzunehmen. Die Kalibrierung der Referenziereinrichtung 33 kann nach einem Tausch der Referenzierkameras 34 oder zur Überprüfung des Messsystems durch geführt werden. Hierbei erfolgt zusätzlich zur Aufnahme der Bezugsmerkmale 29 durch die Messkameras 31, 32 eine Messung und ein Abgleich der gegenseitigen Orientierung der Referenziereinrichtungen 33. Dies erfolgt, indem die Orientierung der LED 35 der in Figur 4 oberen Bildaufnahmeeinrichtung 12 von der gegenüberliegenden Referenzierkamera 34 der in Figur 4 unteren Bildaufnahmeeinrichtung 12 im Bezug zu den Messkameras 31, 32 bestimmt und intern gespeichert wird. Alternativ kann die Orientierung der LED 35 der in Figur 4 unteren Bildaufnahmeeinrichtung 12 von der gegenüberliegenden Referenzierkamera 34 der in Figur 4 oberen Bildaufnahmeeinrichtung 12 im Bezug zu den Messkameras 31, 32 bestimmt und intern gespeichert werden.

## Patentansprüche

1. Verfahren zum Kalibrieren eines Messsystems mit mindestens einer Bildaufnahmeeinrichtung (12) mit
einem nach vorne ausgerichteten Stereo-Kamerasystem und einem nach hinten ausgerichteten Stereo-Kamerasystem, wobei jedes Stereo-Kamerasystem wenigstens zwei Messkameras ((31,31) bzw. (32,32)) umfasst, und
mit einer Auswerteeinheit (13),
wobei mittels einer Kalibriervorrichtung (22) das Messsystem kalibriert wird,
wobei die Kalibriervorrichtung einen Messraum (30) bildet, der durch einen U-förmigen Messrahmen (22) aus mindestens drei ebenen Platten (24,26,27,28) begrenzt wird,
**dadurch gekennzeichnet,**
**dass** in einem ersten Schritt 3D-Koordinaten von auf dem U-förmigen Messrahmen (22) angeordneten Bezugsmerkmalen (29), die in den Messraum (30) der Kalibriervorrichtung (22) weisen, durch mindestens eine Aufnahmekamera (9) bestimmt werden, und
**dass** in einem zweiten Schritt mindestens eine der Bildaufnahmeeinrichtungen (12) im Messraum (30) der Kalibriervorrichtung (22) so angeordnet wird, dass jeweils eine Messkamera (31,32) eine der beiden gegenüberliegenden Platten (24,26) des Messrahmens (22) fokussiert, und
**dass** in einem dritten Schritt mittels der Auswerteeinheit (13) anhand der im ersten Schritt bestimmten 3D-Koordinaten der Bezugsmerkmale (29) die 3D-Koordinaten der mindestens einen Bildaufnahmeeinrichtung (12) und/oder der mindestens zwei Messkameras (31, 32), die jeweils eine der beiden gegenüberliegenden Platten (24,26) des Messrahmens (22) fokussiert, in einem gemeinsamen 3D-Koordinatensystem bestimmt werden.

2. Verfahren nach Anspruch 1, **dadurch gekennzeichnet, dass** im zweiten Schritt die im ersten Schritt bestimmten 3D-Koordinaten der Bezugsmerkmale (29) von der vorhandenen, zu kalibrierenden Bildaufnahmeeinrichtung (12) aufgenommen werden, und dass anhand der aufgenommenen Bezugsmerkmale (29) eine relative und/oder absolute Kalibrierung der mindestens einen Bildaufnahmeeinrichtung (12) und/oder der mindestens zwei Messkameras (31,32) erfolgt.

3. Verfahren nach Anspruch 2, **dadurch gekennzeichnet dass** zusätzlich zur relativen und/oder absoluten Kalibrierung alle intrinsischen oder Teile der intrinsischen Parameter mindestens einer Messkamera (31,32) bestimmt werden.

4. Verfahren nach Anspruch 1, **dadurch gekennzeichnet, dass** im ersten Schritt die mindestens eine Aufnahmekamera (9) mehrfach neu ausgerichtet wird und alle Bezugsmerkmale (29) der Kalibriervorrichtung (22) aus mindestens zwei Aufnahmepositionen durch Änderung der Aufnahmerichtung sequentiell oder kontinuierlich erfasst werden.

5. Verfahren nach Anspruch 1, **dadurch gekennzeichnet, dass** die Aufnahmepositionen und Aufnahmerichtungen der mindestens einen Aufnahmekamera (9) zur sequentiellen oder kontinuierlichen Aufnahme der Bezugsmerkmale (29) der Kalibriervorrichtung (22) durch eine Positioniervorrichtung vorgegeben werden.

6. Verfahren nach Anspruch 5, **dadurch gekennzeichnet, dass** die Aufnahmepositionen und Aufnahmerichtungen der Positioniervorrichtung automatisch durch eine Auswerteeinheit (13) und/oder manuell bestimmt werden.

7. Verfahren nach einem der vorherigen Ansprüche, **dadurch gekennzeichnet, dass** bei einem Tausch von Messkameras (31,32) vor der Kalibrierung einer Bildaufnahmeeinrichtung (12) mindestens eine Messkamera (31,32) unverändert bleiben muss, um die globale Kalibrierung aufrechtzuerhalten.

8. Verfahren nach Anspruch 1, **dadurch gekennzeichnet, dass** jede Bildaufnahmeeinrichtung (12) eine Referenziereinrichtung (33) aufweist, welche zwei Bildaufnahmeeinrichtungen (12) des Messsystems in Bezug zueinander setzt, und dass zum Kalibrieren der Referenziereinrichtungen (33) im zweiten Schritt zwei Bildaufnahmeeinrichtungen (12) so in der Kalibriervorrichtung (22) angeordnet werden, dass die Referenziereinrichtungen (33) einander zugewandt sind, und dass im dritten Schritt mittels der Auswerteeinheit (13) anhand der im ersten Schritt bestimmten 3D-Koordinaten die Referenziereinrichtungen (33) und/oder mindestens eine Messkamera (31,32) der Bildaufnahmeeinrichtungen (12) des Messsystems kalibriert werden.

9. Kalibriervorrichtung zum Kalibrieren eines Messsystems mit mindestens einer Bildaufnahmeeinrichtung (12) mit einem nach vorne ausgerichteten Stereo-Kamerasystem und einem nach hinten ausgerichteten Stereo-Kamerasystem, wobei jedes Stereo-Kamerasystem wenigstens zwei Messkameras ((31,31) bzw. (32,32)) umfasst,
wobei die Kalibriervorrichtung einen Messraum (30) zur Aufnahme der Bildaufnahmevorrichtung (12) aufweist,
wobei der Messraum (30) von einem U-förmigen Messrahmen (22) mit Bezugsmerkmalen (29), welche in den Messraum (30) weisen, begrenzt ist,
wobei der U-förmige Messrahmen Teil der Kalibriervorrichtung ist, und aus mindestens drei fest miteinander verbundenen Platten (24,26,27,28) gebildet wird;
**dadurch gekennzeichnet,**
**dass** die Kalibriervorrichtung mindestens eine Aufnahmekamera (9) aufweist, die ausgebildet ist, 3D-Koordinaten der Bezugsmerkmale (29) zu bestimmen; und
**dass** die Kalibriervorrichtung eine Auswerteeinheit (13) aufweist, die ausgebildet ist, anhand der von der Aufnahmekamera (9) bestimmten 3D-Koordinaten der Bezugsmerkmale (29) die 3D-Koordinaten der mindestens einen Bildaufnahmeeinrichtung (12) und/oder der mindestens zwei Messkameras (31,32) der Bildaufnahmeeinrichtung (12) in einem gemeinsamen 3D-Koordinatensystem zu bestimmen, wenn die Bildaufnahmeeinrichtung (12) so im Messraum (30) der Kalibriervorrichtung (22) angeordnet ist, dass jeweils eine Messkamera (31,32) eine der beiden gegenüberliegenden Platten (24,26) des Messrahmens (22) fokussiert.

10. Kalibriervorrichtung (22) nach Anspruch 9, **dadurch gekennzeichnet dass** der Messrahmen (22) mindestens drei Platten (24,26,27,28) aufweist, in verschiedenen Ebenen zueinander angeordnet sind.

11. Kalibriervorrichtung (22) nach Anspruch 9 oder 10, **dadurch gekennzeichnet, dass** mindestens eine Platte (27,28) im Wesentlichen senkrecht zu zwei einander gegenüber angeordneten Platten (24,26) steht.

12. Kalibriervorrichtung (22) nach Anspruch 9, **dadurch gekennzeichnet, dass** die Bezugsmerkmale (29) auf jeder Platte (24,26,27,28) natürliche und/oder künstliche Marken sind.

13. Kalibriervorrichtung (22) nach Anspruch 12, **dadurch gekennzeichnet, dass** die Bezugsmerkmale (29) retro-reflektierend und/oder aktiv Licht aussendend sind.

14. Kalibriervorrichtung nach Anspruch 12 oder 13, **dadurch gekennzeichnet, dass** die Bezugsmerkmale (29) eine Kodierung haben.

## Claims

1. A method for calibrating a measurement system comprising at least one image recording device (12) having
a forwardly oriented stereo camera system and a rearwardly oriented stereo camera system, each stereo camera system including at least two measurement cameras ((31, 31) and (32, 32), respectively),
and having an analysis unit (13),
wherein the measurement system is calibrated by means of a calibration device (22),
wherein the calibration device forms a measurement space (30) confined by a U-shaped measurement frame (22) of at least three flat plates (24, 26, 27, 28),
**characterised in that**, in a first step, 3D coordinates of reference features (29) positioned on the U-shaped measurement frame (22) and facing into the measurement space (30) of the calibration device (22) are determined by at least one recording camera (9), and
**in that** in a second step, at least one of the image recording devices (12) is disposed in the measurement space (30) of the calibration device (22) such that a respective measurement camera (31, 32) focuses one of the two opposite plates (24, 26) of the measurement frame (22), and
that in a third step, the 3D coordinates of the at least one image recording device (12) and/or of the at least two measurement cameras (31, 32) which each focus one of the two opposing plates (24, 26) of the measurement frame (22), are determined in a common 3D coordinate system by means of the analysis unit (13) using the 3D coordinates of the reference features (29) determined in the first step.

2. The method according to claim 1,
**characterised in that**, in the second step, the 3D coordinates of the reference features (29) determined in the first step are recorded by the existent image recording device (12) to be calibrated, and **in that** a relative and/or absolute calibration of the at least one image recording device (12) and/or the at least two measurement cameras takes place with the aid of the recorded reference features (29).

3. The method according to claim 2,
**characterised in that** all intrinsic or parts of the intrinsic parameters of at least one measurement camera (31, 32) are determined in addition to the relative and/or absolute calibration.

4. The method according to claim 1,
**characterised in that**, in the first step, the at least one recording camera (9) is recalibrated a number of times and all of the reference features (29) of the calibration device (22) are sequentially or continuously acquired from at least two recording positions by changing the recording direction.

5. The method according to claim 1,
**characterised in that** the recording positions and recording directions of the at least one recording camera (9) for the sequential or continuous recording of the reference features (29) of the calibration device (22) are predefined by a positioning device.

6. The method according to claim 5,
**characterised in that** the recording positions and recording directions of the positioning device are determined automatically by an analysis unit (13) and/or manually.

7. The method according to any of the preceding claims,
**characterised in that**, in case of replacement of measurement cameras (31, 32) prior to calibration of an image recording device (12), at least one measurement camera (31, 32) has to remain unchanged in order to maintain the global calibration.

8. The method according to claim 1,
**characterised in that** each image recording device (12) has a referencing device (33) which places two image recording devices (12) of the measurement system in relation to each other, and that, for calibrating the referencing devices (33) in the second step, two image recording devices (12) are disposed in the calibration device (22) such that the referencing devices (33) face each other, and that in the third step, the referencing devices (33) and/or at least one measurement camera (31, 32) of the image recording devices (12) of the measurement system are calibrated by means of the analysis unit (13) using the 3D coordinates determined in the first step.

9. A calibration device for calibrating a measurement system comprising at least one image recording device (12) having a forwardly oriented stereo camera system and a rearwardly oriented stereo camera system, each stereo camera system including at least two measurement cameras ((31, 31) and (32, 32), respectively),
wherein the calibration device has a measurement space (30) for accommodating the image recording device (12),
wherein the measurement space (30) is confined by a U-shaped measurement frame (22) having reference features (29) facing into the measurement space (30),
wherein the U-shaped measurement frame is part of the calibration device and is formed of at least three plates (24, 26, 27, 28) fixedly joined to each other;
**characterised in that** the calibration device comprises at least one recording camera (9) adapted to determine 3D coordinates of the reference features (29); and
that the calibration device comprises an analysis unit (13) adapted to determine, by way of the 3D coordinates of the reference features (29) determined by the recording camera (9), the 3D coordinates of the at least one image recording device (12) and/or of the at least two measurement cameras (31, 32) of the image recording device (12) in a common 3D coordinate system when the image recording device (12) is positioned in the measurement space (30) of the calibration device (22) such that a respective measurement camera (31, 32) focuses one of the two opposite plates (24, 26) of the measurement frame (22).

10. The calibration device (22) according to claim 9,
**characterised in that** the measurement frame (22) has at least three plates (24, 26, 27, 28) disposed in different planes with respect to one another.

11. The calibration device (22) according to claim 9 or 10,
**characterised in that** at least one plate (27, 28) is substantially perpendicular with respect to two plates arranged opposite each other.

12. The calibration device (22) according to claim 9,
**characterised in that** the reference features (29) on each plate (24, 26, 27, 28) are natural and/or artificial marks.

13. The calibration device (22) according to claim 12,
**characterised in that** the reference features (29) are retro-reflective and/or actively light-emitting.

14. The calibration device according to claim 12 or 13,
**characterised in that** the reference features (29) have a coding.

## Revendications

1. Procédé d'étalonnage d'un système de mesure avec au moins un dispositif de prise de vue (12) avec
un système de caméra stéréo orienté vers l'avant et un système de caméra stéréo orienté vers l'arrière, chaque système de caméra stéréo comprenant au moins deux caméras de mesure ((31,31) respectivement (32,32)), et
avec une unité d'évaluation (13),
procédé dans lequel le système de mesure est étalonné à l'aide d'un dispositif d'étalonnage (22),
le dispositif d'étalonnage formant un espace de mesure (30) qui est délimité par un cadre de mesure en forme de U (22) composé d'au moins trois panneaux plans (24, 26, 27, 28),
**caractérisé en ce que**,
dans une première étape, des coordonnées 3D de caractéristiques de référence (29) agencées sur le cadre de mesure en forme de U (22), qui pointent dans l'espace de mesure (30) du dispositif d'étalonnage (22), sont déterminées par au moins une caméra de prise de vue (9), et **en ce que**,
dans une deuxième étape, au moins un des dispositifs de prise de vue (12) dans l'espace de mesure (30) du dispositif d'étalonnage (22) est agencé de manière à ce qu'une caméra de mesure (31, 32) focalise respectivement sur un des deux panneaux opposés (24, 26) du cadre de mesure (22), et **en ce que**,
dans une troisième étape, à l'aide de l'unité d'évaluation (13) et sur la base des coordonnées 3D des caractéristiques de référence (29) déterminées à la première étape, les coordonnées 3D du dispositif de prise de vue (12), un au moins, et/ou des deux caméras de mesure (31, 32) au moins qui focalisent respectivement sur les deux panneaux opposés (24, 26) du cadre de mesure (22), sont déterminées dans un système de coordonnées 3D commun.

2. Procédé selon la revendication 1, **caractérisé en ce que**, à la deuxième étape, les coordonnées 3D des caractéristiques de référence (29) déterminées à la première étape sont capturées par le dispositif de prise de vue (12) présent, qui doit être étalonné, et **en ce que**, à partir des caractéristiques de référence (29) capturées, un étalonnage relatif et/ou absolu du dispositif de prise de vue (12), un au moins, et/ou des au moins deux caméras de mesure (31, 32) est réalisé.

3. Procédé selon la revendication 2, **caractérisé en ce que**, en plus de l'étalonnage relatif et/ou absolu, tous les paramètres intrinsèques ou certains des paramètres intrinsèques d'au moins une caméra de mesure (31, 32) sont déterminés.

4. Procédé selon la revendication 1, **caractérisé en ce que**, à la première étape, la caméra de prise de vue (9), une au moins, est réorientée plusieurs fois et que toutes les caractéristiques de référence (29) du dispositif d'étalonnage (22) sont saisies de manière séquentielle ou continue depuis au moins deux positions de prise de vue par la modification de la direction de prise de vue.

5. Procédé selon la revendication 1, **caractérisé en ce que** les positions de prise de vue et les directions de prise de vue de la caméra de prise de vue (9), une au moins, pour la capture séquentielle ou continue des caractéristiques de référence (29) du dispositif d'étalonnage (22) sont prédéfinies par un dispositif de positionnement.

6. Procédé selon la revendication 5, **caractérisé en ce que** les positions de prise de vue et les directions de prise de vue du dispositif de positionnement sont déterminées automatiquement par une unité d'évaluation (13) et/ou manuellement.

7. Procédé selon l'une quelconque des revendications précédentes, **caractérisé en ce que**, lors d'un remplacement de caméras de mesure (31, 32) au moins une caméra de mesure (31, 32) doit rester inchangée avant l'étalonnage d'un dispositif de prise de vue (12), afin de maintenir l'étalonnage global.

8. Procédé selon la revendication 1, **caractérisé en ce que** chaque dispositif de prise de vue (12) présente un dispositif de référençage (33), qui met en relation deux dispositifs de prise de vue (12) du système de mesure, et **en ce que**, pour l'étalonnage des dispositifs de référençage (33) à la deuxième étape, deux dispositifs de prise de vue (12) sont agencés de telle sorte dans le dispositif d'étalonnage (22) que les dispositifs de référençage (33) sont tournés l'un vers l'autre, et **en ce que**, à la troisième étape, à l'aide de l'unité d'évaluation (13) et sur la base des coordonnées 3D déterminées à la première étape, les dispositifs de référençage (33) et/ou au moins une caméra de mesure (31, 32) des dispositifs de prise de vue (12) du système de mesure sont étalonnés.

9. Dispositif d'étalonnage pour l'étalonnage d'un système de mesure, doté d'au moins un dispositif de prise de vue (12) avec un système de caméra stéréo orienté vers l'avant et un système de caméra stéréo orienté vers l'arrière, dans lequel chaque système de caméra stéréo comprend au moins deux caméras de mesure ((31, 31) respectivement (32, 32)),
le dispositif d'étalonnage présentant un espace de mesure (30) pour l'intégration du dispositif de prise de vue (12),
l'espace de mesure (30) étant délimité par un cadre de mesure en forme de U (22) avec des caractéristiques de référence (29) qui pointent dans l'espace de mesure (30),
le cadre de mesure en forme de U faisant partie intégrante du dispositif d'étalonnage, et étant constitué d'au moins trois panneaux (24, 26, 27, 28) solidement reliés les uns aux autres ;
**caractérisé en ce que**,
le dispositif d'étalonnage présente au moins une caméra de prise de vue (9), constituée de manière à déterminer des coordonnées 3D des caractéristiques de référence (29) ; et
**en ce que** le dispositif d'étalonnage présente une unité d'évaluation (13), constituée de manière à déterminer, à partir des coordonnées 3D des caractéristiques de référence déterminées par la caméra de prise de vue (9), les coordonnées 3D du dispositif de prise de vue (12), un au moins, et/ou des au moins deux caméras de mesure (31, 32) du dispositif de prise de vue (12) dans un système de coordonnées 3D commun, lorsque le dispositif de prise de vue (12) est agencé de telle sorte dans l'espace de mesure (30) du dispositif d'étalonnage (22) qu'une caméra de mesure (31, 32) focalise respectivement sur un des deux panneaux opposés (24, 26) du cadre de mesure (22).

10. Dispositif d'étalonnage (22) selon la revendication 9, **caractérisé en ce que** le cadre de mesure (22) présente au moins trois panneaux (24, 26, 27, 28) qui sont agencés les uns par rapport aux autres selon des plans différents.

11. Dispositif d'étalonnage (22) selon la revendication 9 ou 10, **caractérisé en ce qu'**au moins un panneau (27, 28) est agencé pour l'essentiel à la verticale par rapport à deux panneaux agencés l'un face à l'autre (24, 26).

12. Dispositif d'étalonnage (22) selon la revendication 9, **caractérisé en ce que** les caractéristiques de référence (29) sont des marques naturelles et/ou artificielles sur chaque panneau (24, 26, 27, 28).

13. Dispositif d'étalonnage (22) selon la revendication 12, **caractérisé en ce que** les caractéristiques de référence (29) sont rétroréfléchissantes et/ou activement émettrices de lumière.

14. Dispositif d'étalonnage selon la revendication 12 ou 13, **caractérisé en ce que** les caractéristiques de référence (29) ont un codage.
